# EUROPEAN PATENT SPECIFICATION

(11) **EP 3 614 584 B1**
(45) Date of publication and mention of the grant of the patent: **02.04.2025**
(21) Application number: 18787149.6
(22) Date of filing: 13.04.2018
(51) Int. Cl.: H04W 40/20, G06T 15/06, H04W 16/20, H04B 17/391

(54) **VISIBLE PLANE DETERMINATION METHOD AND DEVICE, INVERSE RAY TRACING METHOD AND DEVICE**
VERFAHREN UND VORRICHTUNG ZUR BESTIMMUNG DER SICHTBAREN EBENE, VERFAHREN UND VORRICHTUNG ZUR INVERSEN STRAHLVERFOLGUNG
PROCÉDÉ ET DISPOSITIF DE DÉTERMINATION DE PLAN VISIBLE, PROCÉDÉ ET DISPOSITIF DE LANCER DE RAYON INVERSE

(30) Priority: 17.04.2017 CN 201710248132
(43) Date of publication of application: 26.02.2020
(73) Proprietor: ZTE Corporation, Shenzhen, Guangdong 518057 (CN)
(72) Inventor: CHEN, Shijun, Shenzhen Guangdong 518057 (CN); DONG, Chengfeng, Shenzhen Guangdong 518057 (CN); CHEN, Qiang, Shenzhen Guangdong 518057 (CN); WANG, Huiqiang, Shenzhen Guangdong 518057 (CN); CHEN, Dawei, Shenzhen Guangdong 518057 (CN)
(74) Representative: Ipsilon
(86) International application number: PCT/CN2018/082957
(87) International publication number: WO 2018/192419

(56) References cited:
- CN-A- 102 621 559
- CN-A- 105 264 566
- GB-A- 2 281 682
- JP-A- 2016 213 835
- US-A- 5 051 737
- US-A- 5 577 175

## Description

### TECHNICAL FIELD

The present disclosure relates to a communication technology, and in particular, to visible plane determination method and device, reverse ray tracing method and device.

### BACKGROUND

When positioning is carried out in an indoor environment, complexity of the indoor environment is far higher than that of an outdoor environment, and requirement for accuracy of indoor positioning is more strict than that of outdoor positioning, so that traditional channel model is not suitable any more, and a more serious challenge is provided for propagation and analysis of positioning signals.

In this regard, in the indoor environment, the propagation and analysis of signals may be performed by using channel simulation. The channel simulation may employ simulation means to simulate a real channel environment for propagation of the signals. Representative channel simulation may be based on ray tracing techniques. In the ray tracing techniques, a reverse ray tracing method may calculate channel characteristics in each ray path relatively accurately. However, existence of diffraction phenomena makes establishment of mirror points possible in an unlimited number of ways, and establishment of a large number of the mirror points and resulting large number of intersection tests increase the complexity of the calculation and reduce determining efficiency.

### SUMMARY

The invention is defined by the appended claims. The claims include a visible plane determining method according to claim 1 and a visible plane determining device according to claim 8.

### BRIEF DESCRIPTION OF THE DRAWINGS

FIG. 1 is a flow chart of steps of a visible plane determining method according to an embodiment of the present disclosure;
FIG. 2 is a flow chart of an implementation of the visible plane determining method according to an embodiment of the present disclosure;
FIG. 3 is a flow chart of steps of a reverse ray tracing method according to an embodiment of the present disclosure;
FIG. 4 is a flow chart of an implementation of the reverse ray tracing method according to an embodiment of the present disclosure;
FIG. 5 is a schematic diagram of visible plane determining in positioning scene one;
FIG. 6 is a spatial layout diagram of the positioning scene one;
FIG. 7 is a schematic diagram of visible plane determining in positioning scene two;
FIG. 8 is a spatial layout diagram of the positioning scene two;
FIG. 9 is a schematic diagram of visible plane determining in positioning scene three;
FIG. 10 is a spatial layout diagram of the positioning scene three;
FIG. 11 is a schematic structural diagram of a visible plane determining device according to an embodiment of the present disclosure; and
FIG. 12 is a schematic structural diagram of a reverse ray tracing device according to an embodiment of the present disclosure.

### DETAILED DESCRIPTION

In an indoor environment, propagation and analysis of signals may be performed by using channel simulation. The channel simulation may employ simulation means to simulate a real channel environment for propagation of the signals. Representative channel simulation may be based on ray tracing techniques. In the ray tracing techniques, a reverse ray tracing method may calculate channel characteristics in each ray path relatively accurately. However, existence of diffraction phenomena makes establishment of mirror points possible in an unlimited number of ways, and establishment of a large number of the mirror points and resulting large number of intersection tests increase overhead of calculating ray tracing propagation paths and reduce determining efficiency.

In some cases, a projection intersection determining method may be used to determine which planes in the environment are invisible (shaded), so that reflection, refraction or diffraction may not occur at the planes, thereby the number of mirror points to be created may be reduced and overhead of calculating the ray tracing propagation paths may be saved. In this case, however, it is necessary to calculate three projections (projections in three directions of X axis, Y axis and Z axis, respectively) for each object in the environment to obtain three projection planes thereof (projection planes on XY plane, XZ plane and YZ plane), and to make a plurality of determinations by using the three projection planes of the object for each plane of the object to determine whether the plane is a visible plane. Such method introduces new calculation cost while reducing the overhead of calculating ray tracing propagation paths, and therefore has a larger overhead.

Embodiments of the present disclosure are described in detail below with reference to the accompanying drawings. It should be understood that the specific embodiments described herein are intended to explain the present disclosure by way of example only and are not intended to limit the scope of the present disclosure.

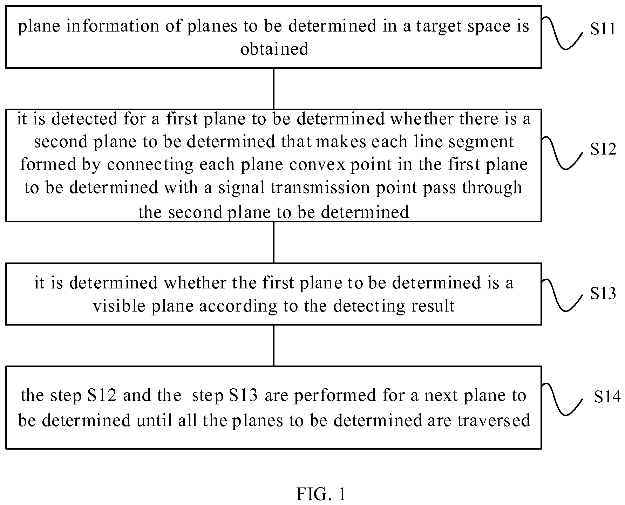

FIG. 1 is a flow chart of steps of a visible plane determining method according to an embodiment of the present disclosure.

As shown in FIG. 1, the embodiment of the present disclosure provides a visible plane determining method which includes steps S11 to S14.

At step S11, plane information of planes to be determined in a target space is obtained.

At step S12, it is detected for a first plane to be determined whether there is a second plane to be determined that makes each line segment formed by connecting each plane convex point in the first plane to be determined with a signal transmission point pass through the second plane to be determined, wherein the first plane to be determined and the second plane to be determined are any two planes in the planes to be determined.

At step S13, it is determined whether the first plane to be determined is a visible plane according to the detecting result.

At step S14, the detecting step S12 and the determining step S13 are performed for a next plane to be determined until all the planes to be determined are traversed.

As described above, according to the visible plane determining method of the embodiment of the present disclosure, it is possible to avoid calculating three projections for each object in the projection intersection determination to obtain three projection planes of the object (projection planes on the XY plane, the XZ plane and the YZ plane), and avoid a case where, for each plane of the object, a plurality of determinations are made by using the three projection planes of the object to determine whether the plane is a visible plane, and thus the overhead of calculating the ray tracing propagation paths is greatly reduced while ensuring the calculation accuracy.

In one embodiment, the planes to be determined include planes where surfaces of objects in the target space are located, and three planes to be determined intersect at one plane convex point.

In one embodiment, position information of the signal transmission point may also be obtained in the step S11 describe above.

In one embodiment, at step S11 described above, a three-dimensional visualized spatial model may be established for a space to be located. The space to be located is also called the target space. In the target space, a plurality of objects whose surfaces may reflect, refract, diffract, etc. signals in propagation are arranged, thereby the propagation paths of the signals may be influenced in various ways. The surfaces of the objects form the planes to be determined, and intersection points of each of the planes to be determined and any two other planes to be determined form the plane convex points. When the channel simulation is performed according to the reverse ray tracing, coordinates of a network element node (i.e., the transmission point) and coordinates of the plane convex points are known conditions and may be directly obtained. In this case, a large number of invisible planes may be eliminated by visible plane determining method to reduce the calculation intensity of a subsequent ray propagation path traversing the planes. The visible plane refers to a plane through which a reverse ray from a receiving point may be reflected, refracted or diffracted to reach a plane of the transmission point. The invisible plane refers to a plane other than the visible plane among all the planes to be determined.

In one embodiment, at step S12, the step of detecting for a first plane to be determined whether there is a second plane to be determined that makes each line segment formed by connecting each plane convex point in the first plane to be determined with a signal transmission point pass through the second plane to be determined may include: reading in a plane equation of the first plane to be determined and obtaining coordinates of each plane convex point in the first plane to be determined; connecting each plane convex point with the signal transmission point respectively to obtain line segments corresponding to the plane convex points respectively; and detecting whether there is the second plane to be determined intersecting with each line segment among the planes to be determined.

In one embodiment, the first plane to be determined and the second plane to be determined described at step S12 are any two planes of the planes to be determined, in other words, the first plane to be determined is one of the planes to be determined, and the second plane to be determined is any other plane of the planes to be determined and different from the first plane to be determined.

In one embodiment, at step S13, the step of determining whether the first plane to be determined is a visible plane according to the detecting result may include: determining the first plane to be determined as an invisible plane in a case where the detecting result indicates that there is the second plane to be determined; and determining the first plane to be determined as a visible plane in a case where the detecting result indicates that there is no the second plane to be determined.

In one embodiment, at step S14, the detecting step and the determining step are performed for a next plane to be determined until all of the planes to be determined are traversed, the next plane to be determined is one of planes which have not been determined among the planes to be determined. That is, all the planes to be determined in the target space are traversed at step S14 to determine whether each plane to be determined is a visible face, thereby obtaining a set of all the visible planes in the target space.

In summary, if there is another plane to be determined satisfying the above intersection condition between the signal transmission point and the first plane to be determined, the first plane to be determined is shaded by one or more of the other planes to be determined, that is, the first plane to be determined is not visible, and thus the signal transmitted from the signal transmission point does not pass through the first plane to be determined. By such method, all planes to be determined in the target space are determined, and the calculation for the invisible planes may be eliminated when the calculation for the reverse ray tracing is performed, so that the calculation amount for the reverse ray tracing is effectively reduced.

The following describes the visible plane determining method provided by the present disclosure in detail by way of specific examples.

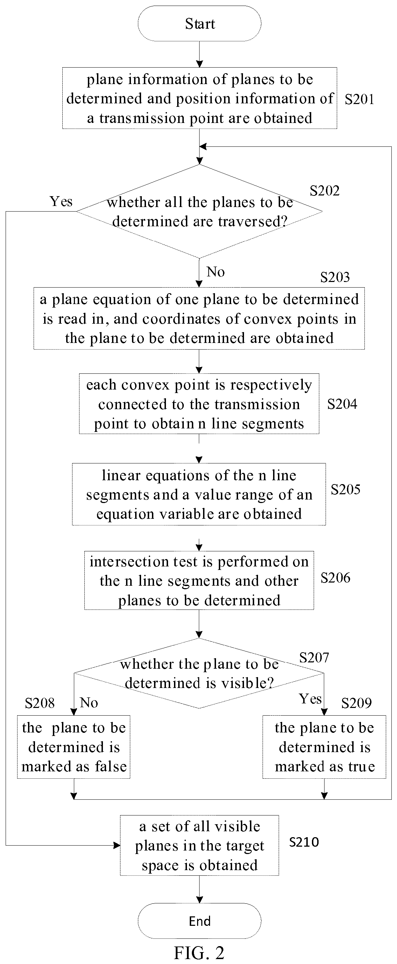

FIG. 2 is a flow chart of an implementation of the visible plane determining method according to an embodiment of the present disclosure.

As shown in FIG. 2, in one embodiment, a method for determining whether a plane to be determined in a target space (e.g., an indoor scene) is a visible plane may include the following steps S201 to S210.

At step S201, plane information of planes to be determined in the target space and position information of a transmission point T are obtained. The position information of the transmission point T includes position coordinates of the transmission point T.

At step S202, it is determined whether all the planes to be determined in the target space are traversed, and if all the planes to be determined have been traversed, the method proceeds to step S210, otherwise, the method proceeds to step S203.

At step S203, a plane equation of one plane to be determined is read in, and coordinates of convex points in the plane to be determined are obtained. The plane to be determined which is read in may be called as a first plane to be determined.

At step S204, each convex point in the plane to be determined is respectively connected to the transmission point T to obtain n line segments respectively corresponding to each convex point in the plane to be determined, where n is the number of convex points in the plane to be determined.

At step S205, a linear equation of each of the n line segments obtained at step S204 and a value range of an equation variable are obtained.

At step S206, intersection test is performed on the linear equations of the n line segments obtained at step S205 and each plane to be determined in the target space except the first plane to be determined.

At step S207, if there is any tested plane to be determined intersecting with the linear equations of the n line segments, and the value ranges of the coordinates of the intersection points are within the value ranges of the variables of the line segments, it is determined that the first plane to be determined which is read in at step S203 is invisible, and the method proceeds to step S208; otherwise, it indicates that the first plane to be determined is visible, and the method proceeds to step S209.

At step S208, the first plane to be determined is marked as false, and the method proceeds to step S202.

At step S209, the first plane to be determined is marked as true, and the method proceeds to step S202.

At step S210, a set of all visible planes in the target space is obtained.

The visible plane determining method provided by the embodiment may greatly reduce the planes needed to be subjected to propagation and analysis, thereby accelerating the ray tracing speed and reducing the calculation overhead.

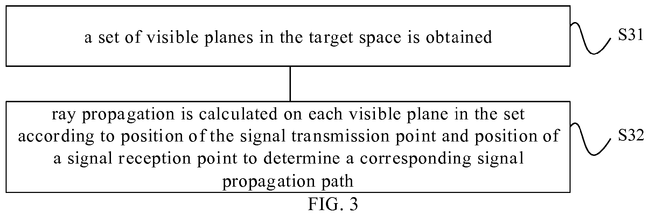

FIG. 3 is a flow chart of steps of a reverse ray tracing method according to an embodiment of the present disclosure.

As shown in FIG. 3, an embodiment of the present disclosure also provides a reverse ray tracing method which uses the visible plane determining method according to an embodiment of the present disclosure, that is, the reverse ray tracing method includes steps S11 to S14 shown in FIG. 1 and steps S31 to S32.

Before step S31 is performed, steps S11 to S14 are performed to obtain a set of visible planes in the target space. Steps S11 to S14 have been described in detail with reference to FIG. 1, and thus descriptions thereof are not repeated here.

At step S31, a set of visible planes in the target space is obtained.

At step S32, ray propagation is calculated on each visible plane in the set according to position of the signal transmission point and position of a signal reception point to determine a corresponding signal propagation path.

The reverse ray tracing method provided by the embodiment of the disclosure may obtain the set of visible planes in the target space to eliminate a large number of invisible planes in the target space in advance, and then, according to the position of the signal transmission point and the position of the signal reception point, the ray propagation is calculated on each visible plane, so that the signal propagation path between the signal transmission point and the signal reception point may be determined.

Since the purpose of the reverse ray tracing is to establish an indoor channel model, the propagation path of a signal between each pair of the signal transmission point and the signal reception point may be studied by using the position of the transmission point and the position of the reception point as known conditions. In addition, according to a principle of optical path reversibility, the channel also exists in a case where the position of the signal transmission point and the signal reception point may be exchanged, and at the moment, the signal transmission direction is opposite.

Furthermore, in order to determine whether the channel found by reflection, refraction, diffraction, etc. may be used for normal communication, in an embodiment of the present disclosure, signal parameter characteristics such as signal strength, transmission power, signal frequency, etc. of a positioning signal of a positioning network element (e.g., a base station, etc.) may also be obtained, so as to quantify the signal in the target space according to the signal parameter characteristics.

In an embodiment of the present disclosure, after calculating ray propagation on each visible plane according to the position of the signal transmission point and the position of the signal reception point (step S32), the reverse ray tracing method provided by the embodiment of the present disclosure may further include: determining a loss of signal strength of the transmitted signal caused by the signal propagation path; and reserving the signal propagation path in a case where the signal strength of the signal subjected to the loss is greater than or equal to a preset threshold, and deleting the signal propagation path in a case where the signal strength of the signal subjected to the loss is less than the preset threshold.

That is, after the signal transmitted from the signal transmission point is reflected, refracted, diffracted, and absorbed by the object in the target space, the signal strength is attenuated to different degrees. If the signal strength of the signal is still relatively high when the signal reaches the signal reception point after being attenuated, the signal may be effectively detected by the receiver, and the corresponding channel may be reserved as a signal transmission path. Otherwise, if the signal strength is small when the signal reaches the signal reception point after being attenuated, the signal may not be effectively detected by the receiver, and the corresponding channel may not be utilized and may be deleted.

The reverse ray tracing calculation method provided by the embodiment of the invention can effectively simulate the propagation paths of signals in space, establish channel models, and calculate parameter of each path according to the electromagnetic theory, thereby realizing an accurate simulation of the channels. Moreover, the planes needed to be subjected to propagation and analysis may be greatly reduced based on the visible plane determination, thereby accelerating the ray tracing speed and reducing the calculation overhead.

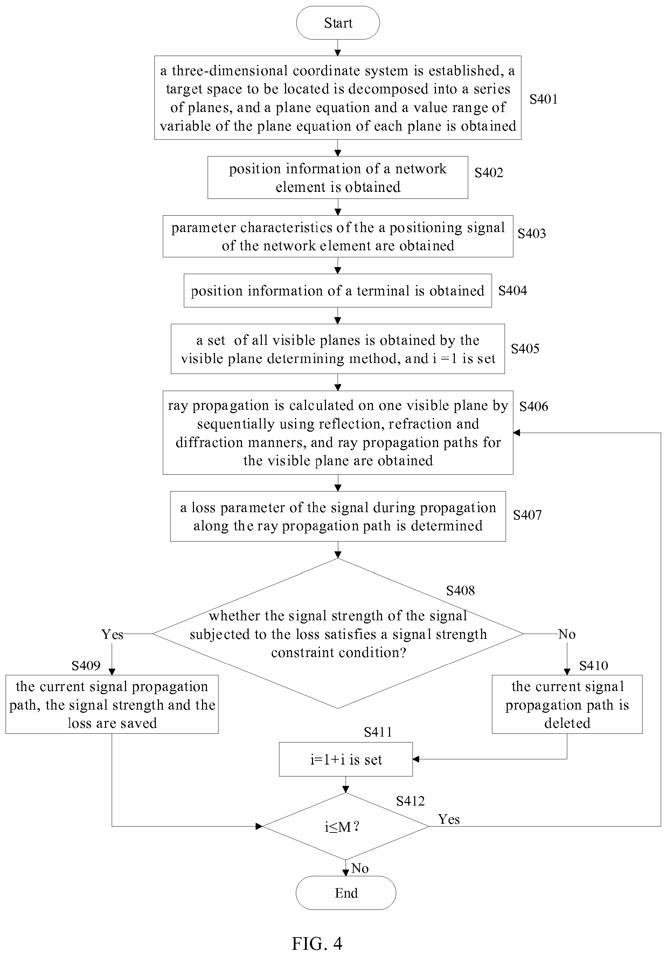

FIG. 4 is a flow chart of an implementation of the reverse ray tracing method according to an embodiment of the present disclosure.

As shown in FIG. 4, the reverse ray tracing method provided by the present embodiment may include the following steps S401 to S412.

At step S401, a three-dimensional coordinate system is established, surfaces of an object in a target space to be located is decomposed into a series of planes, each of which is represented as *surfaceᵢ =* (*Eqi, domain*), where *Eqi* is a plane equation, and *domain* is a value range of variable of the plane equation. Assuming that there are N planes to be determined in the target space in total, the N planes to be determined are denoted as a set U = {*surfaceᵢ,* 1 < i < N}, where N is a positive integer greater than zero and i is a positive integer variable between 1 and N.

At step S402, position information of a network element is obtained, i.e., the three-dimensional position coordinate of the transmission point of the network element is obtained.

At step S403, signal parameter characteristics such as signal strength, transmission power, signal frequency, etc. of a positioning signal of the network element are obtained.

At step S404, position information of a terminal is obtained, i.e., three-dimensional position coordinate of the reception point is obtained.

At step S405, a set V of all visible planes is obtained by the visible plane determining method (i.e., steps S11-S14 shown in FIG. 1) provided by the embodiment described above. Assuming that there are M visible planes in total in the target space, the set of the visible planes is denoted as V = {*surfaceᵢ,* 1 < i < M}, where M is a positive integer greater than zero, i is a positive integer variable between 1 and M, and i = 1 is set. The set V of the visible planes is a subset of the set U to be determined as described above, and thus M ≤ N.

At step S406, the visible plane *surfaceᵢ* is extracted from the set V of the visible planes, ray propagation is calculated on the visible plane *surfaceᵢ* by sequentially using reflection, refraction and diffraction manners, and ray propagation paths for the visible plane are obtained according to a set number of times of reflection, refraction and diffraction, and are stored in a ray path table of the terminal (i.e., the reception point).

At step S407, a loss parameter of the signal during propagation along the ray propagation path is determined according to the signal propagation path and existing direction, reflection, refraction and diffraction loss calculation formulas.

At step S408, by comparing the signal strength of the signal subjected to the loss with a preset signal strength minimum value (i.e., a preset threshold value), it is determined whether the signal strength of the signal satisfies a signal strength constraint condition, i.e., whether the signal strength is greater than or equal to the preset threshold value. If the determination result is positive, it indicates that the constraint condition is satisfied, and the method proceeds to step S409. If the determination result is negative, it indicates that the constraint condition is not satisfied, and the method proceeds to step S410.

At step S409, the constraint condition is satisfied, i.e., the signal strength is greater than or equal to the preset threshold value, which indicates that the signal strength is available for positioning, and the current signal propagation path, the signal strength and the loss of the signal are saved for subsequent calculation. The method proceeds to step S411.

At step S410, the constraint condition is not satisfied, i.e., the signal strength is less than the preset threshold value, which indicates that the signal is not available for positioning, the path searching is ended and the corresponding signal propagation path is deleted. The method proceeds to step S411.

At step S411, i is incremented by 1, i.e., i = i + 1, and the method proceeds to step S412.

At step S412, it is determined whether i ≤ M. If yes, the method proceeds to step S406 and the analysis for the ray propagation paths for a next visible plane is continued; and if not, the ray propagation paths have been analyzed for all visible planes, and the method ends.

The reverse ray tracing method provided by the present disclosure is described in detail below by specific embodiments.

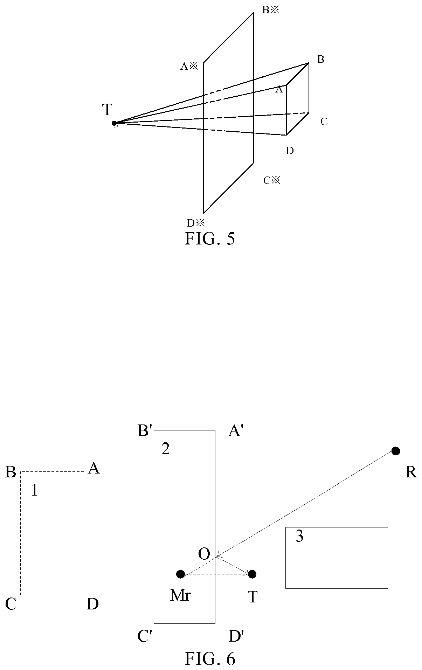

FIG. 5 is a schematic diagram of visible plane determining in positioning scene one.

In the positioning scene one, as shown in FIG. 5, T in the diagram is a transmission point, and a plane ABCD is a plane to be determined. The following is an example of making a determination for a plane to be determined in the positioning scene one by using, for example, the visible plane determining method described with reference to FIGs. 1 and 2. For the sake of brevity, only specific steps related to the plane ABCD to be determined are described herein, and other steps are omitted.

The determining method may include: reading in a plane equation of the spatial plane ABCD to be determined, and obtaining coordinates of each convex point A, B, C, D; connecting each convex point A, B, C, D of the spatial plane ABCD to be determined with the transmission point T respectively to obtain four line segments; obtaining a linear equation of each line segment TA, TB, TC and TD and a value range of an equation variable; performing intersection test on the obtained linear equations of the four line segments and each plane in the target space model except the plane ABCD. In this embodiment, as shown in FIG. 5, there is a plane A'B'C'D' intersecting with all of the line segments TA, TB, TC, and TD, and coordinate values of the intersection points are within the range of the equation variable of the line segments, which indicates that the plane ABCD to be determined is an invisible plane, so that the spatial plane ABCD is marked as false.

In the present embodiment, it is determined that the spatial plane ABCD is an invisible plane, and it is assumed that the spatial plane A'B'C'D' shading the spatial plane ABCD is a visible plane.

The following is an example of ray propagation calculation for a plane to be determined in the scene one by using, for example, the reverse ray tracing method described with reference to FIGs. 3 and 4 to determine a corresponding signal propagation path. For the sake of brevity, the steps specific to plane A'B'C'D' are described herein by way of example only, and other steps are omitted.

FIG. 6 is a spatial layout diagram of the positioning scene one.

As shown in FIG. 6, ray propagation is calculated in a reflection manner for the visible plane A'B'C'D' in a set of visible planes. For example, the propagation path of the signal is obtained by one reflection. Firstly, for an object 2, a mirror point Mr of the transmission point T is created according to the plane A'B'C'D', and there is a directly reachable path Mr → R between the mirror point Mr and a reception point R. An intersection point of the path Mr → R and the visible plane A'B'C'D' is O, and thus a signal propagation path from the transmission point T to the reception point R is T → O → R. This path is stored in a ray path table of a terminal (i.e., the reception point R).

The steps described with reference to FIG. 3 are executed for the path T → O → R, and the specific implementation is similar to steps S407 to S410 described with reference to FIG. 4, which is not described again here.

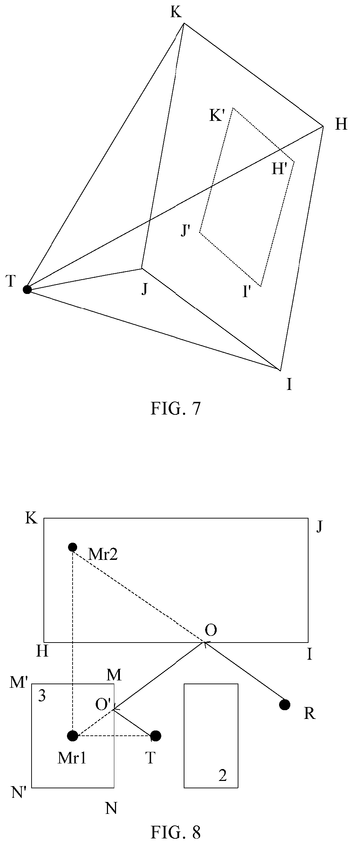

FIG. 7 is a schematic diagram of visible plane determining in positioning scene two.

In the positioning scene two, as shown in FIG. 7, T is a transmission point, and a plane HIJK is a plane to be determined. The following is an example of making a determination for a plane to be determined in the positioning scene two by using, for example, the visible plane determining method described with reference to FIGs. 1 and 2. For the sake of brevity, only specific steps related to the plane HIJK to be determined are described herein, and other steps are omitted.

The determining method may include: reading in a plane equation of the spatial plane HIJK to be determined, and obtaining coordinates of each convex point H, I, J, K; connecting each convex point H, I, J, K of the spatial plane HIJK to be determined with the transmission point T respectively to obtain four line segments; obtaining a linear equation of each line segment TH, TI, TJ and TK and a value range of an equation variable; performing intersection test on the obtained linear equations of the four line segments and each plane in the target space except the plane HIJK. As shown in FIG. 7, there is no plane to be tested intersecting which with all of the four line segments TH, TI, TJ, TK, which indicates that the spatial plane HIJK to be determined is a visible plane, and thus the spatial plane HIJK is marked as true.

In the present embodiment, the spatial plane HIJK is determined as a visible plane, and it is also assumed herein that the spatial plane MNN'M' is also a visible plane.

The following is an example of ray propagation calculation for a plane to be determined in the scene two by using, for example, the reverse ray tracing method described with reference to FIGs. 3 and 4 to determine a corresponding signal propagation path. For the sake of brevity, the steps specific to plane MNN'M' are described herein by way of example only, and other steps are omitted.

FIG. 8 is a spatial layout diagram of the positioning scene two.

As shown in FIG. 8, ray propagation is calculated on the visible plane MNN'M', and for example, the propagation path of the signal in the indoor environment is obtained by two reflections. Firstly, for an object 3, a mirror point Mr1 of the transmission point T is created according to the visible plane MNN'M'. It is found through intersection test that there is an object 2 shading between the mirror point Mr1 and a reception point R, and thus there is no directly reachable path. Then, a second mirror point Mr2 of the mirror point Mr1 is created according to the plane HIJK of an object 1, at this time, it is found that there is a directly reachable path Mr2 → R between the second mirror point Mr2 and the reception point R, a connecting line of Mr2 and R intersects with the plane HIJK at an intersection point O, and a connecting line of the intersection point O and the mirror point Mr1 intersects with the plane MNN'M' at an intersection point O', so that a signal propagation path from the transmission point T to the reception point R is T → O' → O → R. This path is stored in a ray path table of a terminal (i.e., the reception point R).

The steps described with reference to FIG. 3 are executed for the path T → O' → O → R, and the specific implementation is similar to steps S407 to S410 described with reference to FIG. 4, which is not described again here.

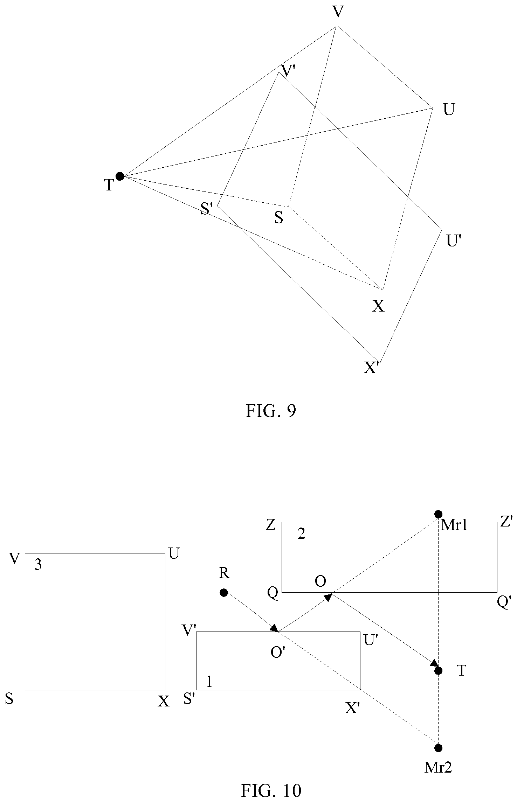

FIG. 9 is a schematic diagram of visible plane determining in the positioning scene three.

In the positioning scene three, as shown in FIG. 9, T is a transmission point, and a plane SXUV is a plane to be determined. The following is an example of making a determination for a plane to be determined in the positioning scene three by using, for example, the visible plane determining method described with reference to FIGs. 1 and 2. For the sake of brevity, only specific steps related to the plane SXUV to be determined are described herein, and other steps are omitted.

The determining method may include: reading in a plane equation of a spatial plane SXUV to be determined, and obtaining coordinates of each convex point S, X, U, V; connecting each convex point S, X, U, V of the spatial plane SXUV to be determined with the transmission point T respectively to obtain four line segments; obtaining a linear equation of each line segment TS, TX, TU and TV and a value range of an equation variable; performing intersection test on the obtained linear equations of the four line segments and each plane in the target space except the plane SXUV. As shown in FIG. 9, there is a plane S'X'U'V' intersecting with the line segments TS, TX but does not intersect with the line segments TU, TV, and there is no plane intersecting with all of the four line segments TS, TX, TU, TV, which indicates that the spatial plane SXUV to be determined is a visible plane, and thus the spatial plane SXUV is marked as true.

In the present embodiment, the spatial plane SXUV is determined as a visible plane, and it is also assumed herein that the spatial plane QZZ'Q' and the spatial plane S'X'U'V' are also visible planes.

The following is an example of ray propagation calculation for a plane to be determined in the scene three by using, for example, the reverse ray tracing method described with reference to FIGs. 3 and 4 to determine a corresponding signal propagation path. For the sake of brevity, steps specific to plane QZZ'Q' are described herein by way of example only, and other steps are omitted.

FIG. 10 is a spatial layout diagram of the positioning scene three.

As shown in FIG. 10, ray propagation is calculated in a reflection manner for the visible plane QZZ'Q', for example, the propagation path of the signal in the indoor environment is obtained by two reflections. Firstly, for an object 2, a mirror point Mr1 of the transmission point T is created according to the visible plane QZZ'Q', and it is found through intersection test that there is the object 2 shading between the mirror points Mr1 and the reception point R, and thus there is no directly reachable path. Then, a second mirror point Mr2 of the mirror point Mr1 is created according to the visible plane S'X'U'V' of an object 1, at this time, it is found that there is a directly reachable path Mr2 → R between the second mirror points Mr2 and the reception point R, a connecting line of Mr2 and R intersects with the plane S'X'U'V' at the intersection point O', and a connecting line of the intersection point O' and the mirror point Mr1 intersects with the plane QZZ'Q' at an intersection point O, so that a signal propagation path T → O' → O → R from the transmission point T to the reception point R is obtained. This path is stored in a ray path table of a terminal (i.e., the reception point R).

The steps described with reference to FIG. 3 are executed for the path T → O' → O → R, and the specific implementation is similar to steps S407-S410 described with reference to FIG. 4, which is not described again here.

The embodiment of the invention provides a reverse ray tracing method. On one hand, the reverse ray tracing method converts two-dimensional ray tracing into three-dimensional ray tracing, and further improves the accuracy of results of signal propagation and analysis. On the other hand, the method adopts a light-weight visible plane determining method based on intersection test, improves running speed of simulating and calculating the signal propagation path by using the reverse ray tracing method, greatly reduces running time, and improves analysis efficiency.

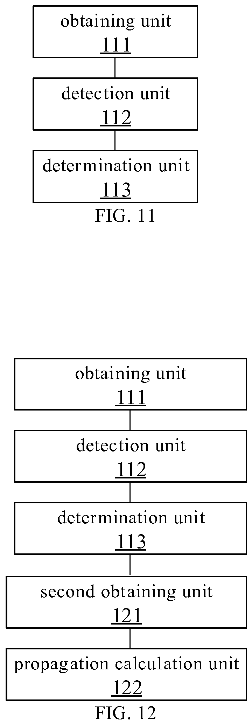

FIG. 11 is a schematic structural diagram of a visible plane determining device according to an embodiment of the present disclosure.

As shown in FIG. 11, the embodiment of the present disclosure also provides a visible plane determining device provided in a computer device and including an obtaining unit 111, a detection unit 112, and a determination unit 113.

The obtaining unit 111 is configured to obtain plane information of planes to be determined in a target space.

The detection unit 112 is configured to detect for a first plane to be determined whether there is a second plane to be determined that makes each line segment formed by connecting each plane convex point in the first plane to be determined with a signal transmission point pass through the second plane to be determined, wherein the first plane to be determined and the second plane to be determined are any two planes in the planes to be determined.

The determination unit 113 is configured to determine whether the first plane to be determined is a visible plane according to the detecting result.

The detection unit 112 and the determination unit 113 are further configured to perform the detecting operation and the determining operation for a next plane to be determined until all the planes to be determined are traversed.

In one embodiment, the planes to be determined include planes where surfaces of objects in the target space are located, and three planes to be determined intersect at one plane convex point.

In one embodiment, the obtaining unit 111 is further configured to obtain position information of the transmission point.

In one embodiment, the detection unit 112 is further configured to: read in a plane equation of the first plane to be determined and obtain coordinates of each plane convex point in the first plane to be determined; connect each plane convex point with the signal transmission point respectively to obtain line segments corresponding to the plane convex points respectively; and detect whether there is the second plane to be determined intersecting with each line segment among the planes to be determined.

In one embodiment, the determination unit 113 is further configured to: determine the first plane to be determined as an invisible plane in a case where the detecting result indicates that there is the second plane to be determined; and determine the first plane to be determined as a visible plane in a case where the detecting result indicates that there is no the second plane to be determined.

As described above, according to the visible plane determining device of the embodiment of the present disclosure, it is possible to avoid calculating three projections for each object in the projection intersection determination to obtain three projection planes of the object (projection planes on the XY plane, the XZ plane and the YZ plane), and avoid a case where, for each plane of the object, a plurality of determinations are made by using the three projection planes of the object to determine whether the plane is a visible plane, and thus the overhead of calculating the ray tracing propagation paths is greatly reduced while ensuring the calculation accuracy.

FIG. 12 is a schematic structural diagram of a reverse ray tracing device according to an embodiment of the present disclosure.

As shown in FIG. 12, the embodiment of the present disclosure further provides a reverse ray tracing device provided in a computer device and including the visible plane determining device as described above, and further includes a second obtaining unit 121 and a propagation calculation unit 122.

The second obtaining unit 121 is communicatively coupled to the visible plane determining device and configured to obtain a set of visible planes in the target space.

The propagation calculation unit 122 is configured to calculate ray propagation on each visible plane in the set according to position of a signal transmission point and position of a signal reception point to determine a corresponding signal propagation path.

In one embodiment, the second obtaining unit 121 is further configured to obtain position information of the transmission point and position information of the reception point.

In one embodiment, the reverse ray tracing device may further include a loss determination unit, a reservation unit and a deletion unit.

The loss determination unit is configured to determine a loss of signal strength of the transmitted signal caused by the signal propagation path which is determined by the propagation calculation unit 122.

The reservation unit is configured to reserve the signal propagation path in a case where the signal strength of the signal subjected to the loss is greater than or equal to a preset threshold.

The deletion unit is configured to delete the signal propagation path in a case where the signal strength of the signal subjected to the loss is less than the preset threshold.

It should be noted that the terms "include" "comprise" or any other variation thereof are intended to cover a non-exclusive inclusion, such that a process, method, article or device including a list of elements does not include only those elements but may include other elements not expressly listed or elements inherent to such process, method, article or device. Without further limitation, the element defined by the phrase "comprising one ... ... " does not exclude the presence of additional identical elements in the process, method, article or device that comprises the element.

According to the above description of the embodiments, it is clear to those skilled in the art that the methods of the above embodiments may be implemented by means of a combination of software and necessary general purposed hardware platforms. Of course, the methods may be implemented by hardware. Based on such understanding, the technical solution of the present disclosure may be embodied in essence or in a contribution to the prior art in a form of a software product, which is stored in a storage medium (such as ROM/RAM, magnetic disk, optical disk) and includes several instructions to enable a terminal device (such as mobile phone, computer, server, air conditioner or network device) to perform the method according to the embodiments of the present disclosure.

Although some embodiments of the present disclosure have been specifically disclosed for illustrative purposes, those skilled in the art will appreciate that various modifications, additions and substitutions are possible. Accordingly, the scope of the present disclosure should not be limited to the embodiments described above, the intended limitations are defined by the claims.

## Claims

1. A visible plane determining method, comprising:
obtaining (S11) plane information of planes to be determined in a target space;
detecting (S12), for a first plane to be determined, whether there is a second plane to be determined that makes each line segment formed by connecting each plane convex point in the first plane to be determined with a signal transmission point pass through the second plane to be determined, wherein the first plane to be determined and the second plane to be determined are any two planes in the planes to be determined;
determining (S13) whether the first plane to be determined is a visible plane according to the detecting result; and
performing (S14) the detecting step and the determining step for a next plane to be determined until all the planes to be determined are traversed so as to obtain a set of visible planes in the target space,
wherein the next plane to be determined is one of the planes which have not been determined among the planes to be determined, and
wherein the planes to be determined comprise planes where surfaces of objects in the target space are located, and wherein three of the planes to be determined intersect at one plane convex point.

2. The visible plane determining method of claim 1, before the step of detecting, for the first plane to be determined, whether there is the second plane to be determined, the method further comprises:
obtaining position information of the transmission point.

3. The visible plane determining method of claim 1, wherein the step of detecting, for the first plane to be determined, whether there is the second plane to be determined that makes each line segment formed by connecting each plane convex point in the first plane to be determined with the signal transmission point pass through the second plane to be determined comprises:
reading in (S203) a plane equation of the first plane to be determined and obtaining coordinates of each plane convex point in the first plane to be determined;
connecting (S204) each plane convex point with the signal transmission point respectively to obtain line segments corresponding to the plane convex points respectively; and
detecting whether there is the second plane to be determined intersecting with each line segment among the planes to be determined.

4. The visible plane determining method of claim 1, wherein the step of determining whether the first plane to be determined is a visible plane according to the detecting result comprises:
determining the first plane to be determined as an invisible plane in a case where the detecting result indicates that there is the second plane to be determined; and
determining the first plane to be determined as a visible plane in a case where the detecting result indicates that there is no the second plane to be determined.

5. A reverse ray tracing method, comprising:
calculating (S32) ray propagation on each visible plane in the set obtained according to the visible plane determining method of claim 1 according to position of the signal transmission point and position of a signal reception point to determine a corresponding signal propagation path.

6. The reverse ray tracing method of claim 5, further comprising:
obtaining position information of the transmission point and position information of the reception point.

7. The reverse ray tracing method of claim 5, after the step of calculating ray propagation on each visible plane in the set according to the position of the signal transmission point and the position of a signal reception point, the method further comprises:
determining (S407) a loss of signal strength of a transmitted signal caused by the signal propagation path; and
reserving (S409) the signal propagation path in a case where the signal strength of the signal subjected to the loss is greater than or equal to a preset threshold value, and deleting (S410) the signal propagation path in a case where the signal strength of the signal subjected to the loss is less than the preset threshold value.

8. A visible plane determining device, comprises:
an obtaining unit (111) configured to obtain plane information of planes to be determined in a target space;
a detection unit (112) configured to detect, for a first plane to be determined, whether there is a second plane to be determined that makes each line segment formed by connecting each plane convex point in the first plane to be determined with a signal transmission point pass through the second plane to be determined, wherein the first plane to be determined and the second plane to be determined are any two planes in the planes to be determined; and
a determination unit (113) configured to determine whether the first plane to be determined is a visible plane according to the detecting result,
wherein the detection unit (112) and the determination unit (113) are further configured to perform the detecting operation and the determining operation for a next plane to be determined until all the planes to be determined are traversed so as to obtain a set of visible planes in the target space,
wherein the next plane to be determined is one of the planes which have not been determined among the planes to be determined, and
wherein the planes to be determined comprise planes where surfaces of objects in the target space are located, and wherein three of the planes to be determined intersect at one plane convex point.

9. The visible plane determining device of claim 8, wherein the detection unit (112) is further configured to:
read in a plane equation of the first plane to be determined and obtain coordinates of each plane convex point in the first plane to be determined;
connect each plane convex point with the signal transmission point respectively to obtain line segments corresponding to the plane convex points respectively; and
detect whether there is the second plane to be determined intersecting with each line segment among the planes to be determined.

10. The visible plane determining device of claim 8, wherein the determination unit (113) is further configured to:
determine the first plane to be determined as an invisible plane in a case where the detecting result indicates that there is the second plane to be determined; and
determine the first plane to be determined as a visible plane in a case where the detecting result indicates that there is no the second plane to be determined.

11. A reverse ray tracing device, comprising the visible plane determination device of claim 8, and:
a second obtaining unit (121) communicatively coupled to the visible plane determination device and configured to obtain the set of visible planes in the target space; and
a propagation calculation (122) unit configured to calculate ray propagation on each visible plane in the set according to position of the signal transmission point and position of a signal reception point to determine a corresponding signal propagation path.

12. A computer readable storage medium having a computer program stored thereon which, when executed by a processor, causes the processor to perform the visible plane determining method according to any one of claims 1 to 4.

13. A computer readable storage medium having a computer program stored thereon which, when executed by a processor, causes the process to perform the reverse ray tracing method according to any one of claims 5 to 7.

## Patentansprüche

1. Verfahren zum Bestimmen der sichtbaren Ebene, umfassend:
Erlangen (S11) von Ebeneninformationen über zu bestimmende Ebenen in einem Zielraum;
Erfassen (S12), für eine erste zu bestimmende Ebene, ob es eine zweite zu bestimmende Ebene gibt, die jedes Liniensegment, das durch Verbinden jedes konvexen Ebenenpunkts in der ersten zu bestimmenden Ebene mit einem Signalübertragungspunkt gebildet wird, durch die zweite zu bestimmende Ebene verlaufen lässt, wobei die erste zu bestimmende Ebene und die zweite zu bestimmende Ebene zwei beliebige Ebenen in den zu bestimmenden Ebenen sind;
Bestimmen (S13), ob die erste zu bestimmende Ebene eine sichtbare Ebene ist, gemäß dem Erfassungsresultat; und
Durchführen (S14) des Erfassungsschritts und des Bestimmungsschritts für eine nächste zu bestimmende Ebene, bis alle zu bestimmenden Ebenen durchlaufen sind, um einen Satz sichtbarer Ebenen im Zielraum zu erlangen,
wobei die nächste zu bestimmende Ebene eine der Ebenen ist, die unter den zu bestimmenden Ebenen nicht bestimmt worden sind, und
wobei die zu bestimmenden Ebenen Ebenen umfassen, bei denen sich Oberflächen von Objekten in dem Zielraum befinden, und wobei drei der zu bestimmenden Ebenen sich in einem konvexen Ebenenpunkt schneiden.

2. Verfahren zum Bestimmen der sichtbaren Ebene nach Anspruch 1, wobei das Verfahren vor dem Schritt eines Erfassens für die erste zu bestimmende Ebene, ob es die zweite zu bestimmende Ebene gibt, ferner Folgendes umfasst:
Erlangen von Positionsinformationen des Übertragungspunkts.

3. Verfahren zum Bestimmen der sichtbaren Ebene nach Anspruch 1, wobei der Schritt eines Erfassens für die erste zu bestimmende Ebene, ob es die zweite zu bestimmende Ebene gibt, die jedes Liniensegment, das durch Verbinden jedes konvexen Ebenenpunkts in der ersten zu bestimmenden Ebene mit dem Signalübertragungspunkt gebildet wird, durch die zweite zu bestimmende Ebene verlaufen lässt, Folgendes umfasst:
Lesen in (S203) einer Ebenengleichung der ersten zu bestimmenden Ebene und Erlangen von Koordinaten von jedem konvexen Ebenenpunkt in der ersten zu bestimmenden Ebene;
Verbinden (S204) jedes konvexen Ebenenpunkts mit dem jeweiligen Signalübertragungspunkt, um Liniensegmente zu erlangen, die jeweils den konvexen Ebenenpunkten entsprechen; und
Erfassen, ob sich die zweite zu bestimmende Ebene mit jedem Liniensegment der zu bestimmenden Ebenen schneidet.

4. Verfahren zum Bestimmen der sichtbaren Ebene nach Anspruch 1, wobei der Schritt eines Bestimmens, ob die erste zu bestimmende Ebene eine sichtbare Ebene ist, gemäß dem Erfassungsresultat Folgendes umfasst:
Bestimmen der ersten zu bestimmenden Ebene als eine unsichtbare Ebene in einem Fall, in dem das Erfassungsresultat angibt, dass es die zweite zu bestimmende Ebene gibt; und
Bestimmen der ersten zu bestimmenden Ebene als sichtbare Ebene in einem Fall, in dem das Erfassungsresultat angibt, dass es die zweite zu bestimmende Ebene nicht gibt.

5. Inverses Strahlverfolgungsverfahren, umfassend:
Berechnen (S32) von Strahlausbreitung auf jeder sichtbaren Ebene in dem Satz, der gemäß dem Verfahren zum Bestimmen der sichtbaren Ebene nach Anspruch 1 erlangt wird, gemäß einer Position des Signalübertragungspunkts und einer Position eines Signalempfangspunkts, um einen entsprechenden Signalausbreitungspfad zu bestimmen.

6. Inverses Strahlverfolgungsverfahren nach Anspruch 5, ferner umfassend:
Erlangen von Positionsinformationen des Übertragungspunktes und Positionsinformationen des Empfangspunktes.

7. Inverses Strahlverfolgungsverfahren nach Anspruch 5, wobei das Verfahren nach dem Schritt eines Berechnens von Strahlausbreitung auf jeder sichtbaren Ebene in dem Satz gemäß der Position des Signalübertragungspunkts und der Position eines Signalempfangspunkts ferner Folgendes umfasst:
Bestimmen (S407) eines Verlusts von Signalstärke eines übertragenen Signals, verursacht durch den Signalausbreitungspfad; und
Reservieren (S409) des Signalausbreitungspfads in einem Fall, in dem die Signalstärke des dem Verlust unterliegenden Signals größer als oder gleich wie ein voreingestellter Schwellenwert ist, und Löschen (S410) des Signalausbreitungspfads in einem Fall, in dem die Signalstärke des dem Verlust unterliegenden Signals kleiner als der voreingestellte Schwellenwert ist.

8. Vorrichtung zum Bestimmen der sichtbaren Ebene, umfassend:
eine Erlangungseinheit (111), die konfiguriert ist, um Ebeneninformationen von zu bestimmenden Ebenen in einem Zielraum zu erlangen;
eine Erfassungseinheit (112), die konfiguriert ist, um für eine erste zu bestimmende Ebene zu erfassen, ob es eine zweite zu bestimmende Ebene gibt, die jedes Liniensegment, das durch Verbinden jedes konvexen Ebenenpunkts in der ersten zu bestimmenden Ebene mit einem Signalübertragungspunkt gebildet wird, durch die zweite zu bestimmende Ebene verlaufen lässt, wobei die erste zu bestimmende Ebene und die zweite zu bestimmende Ebene zwei beliebige Ebenen in den zu bestimmenden Ebenen sind; und
eine Bestimmungseinheit (113), die konfiguriert ist, um zu bestimmen, ob die erste zu bestimmende Ebene eine sichtbare Ebene ist, gemäß dem Erfassungsresultat; und
wobei die Erfassungseinheit (112) und die Bestimmungseinheit (113) ferner konfiguriert sind, um den Erfassungsvorgang und den Bestimmungsvorgang für eine nächste zu bestimmende Ebene durchführen, bis alle zu bestimmenden Ebenen durchlaufen sind, um einen Satz von sichtbaren Ebenen in dem Zielraum zu erlangen,
wobei die nächste zu bestimmende Ebene eine der Ebenen ist, die unter den zu bestimmenden Ebenen nicht bestimmt worden sind, und
wobei die zu bestimmenden Ebenen Ebenen umfassen, bei denen sich Oberflächen von Objekten in dem Zielraum befinden, und wobei drei der zu bestimmenden Ebenen sich in einem konvexen Ebenenpunkt schneiden.

9. Vorrichtung zum Bestimmen der sichtbaren Ebene nach Anspruch 8, wobei die Erfassungseinheit (112) ferner zu Folgendem konfiguriert ist:
Lesen in einer Ebenengleichung der ersten zu bestimmenden Ebene und Erlangen von Koordinaten von jedem konvexen Ebenenpunkt in der ersten zu bestimmenden Ebene;
Verbinden jedes konvexen Ebenenpunkts mit dem jeweiligen Signalübertragungspunkt, um Liniensegmente zu erlangen, die jeweils den konvexen Ebenenpunkten entsprechen; und Erfassen, ob sich die zweite zu bestimmende Ebene mit jedem Liniensegment der zu bestimmenden Ebenen schneidet.

10. Vorrichtung zum Bestimmen der sichtbaren Ebene nach Anspruch 8, wobei die Bestimmungseinheit (113) ferner zu Folgendem konfiguriert ist:
Bestimmen der ersten zu bestimmenden Ebene als eine unsichtbare Ebene in einem Fall, in dem das Erfassungsresultat angibt, dass es die zweite zu bestimmende Ebene gibt; und
Bestimmen der ersten zu bestimmenden Ebene als sichtbare Ebene in einem Fall, in dem das Erfassungsresultat angibt, dass es die zweite zu bestimmende Ebene nicht gibt.

11. Inverse Strahlverfolgungsvorrichtung, umfassend die Vorrichtung zum Bestimmen der sichtbaren Ebene nach Anspruch 8, und:
eine zweite Erlangungseinheit (121), die kommunikativ mit der Vorrichtung zum Bestimmen der sichtbaren Ebene gekoppelt und konfiguriert ist, um den Satz von sichtbaren Ebenen in dem Zielraum zu erfassen; und
eine Ausbreitungsberechnungseinheit (122), die konfiguriert ist, um eine Strahlausbreitung auf jeder sichtbaren Ebene in dem Satz gemäß der Position des Signalübertragungspunkts und der Position eines Signalempfangspunkts zu berechnen, um einen entsprechenden Signalausbreitungsweg zu bestimmen.

12. Computerlesbares Speichermedium, das ein darauf gespeichertes Computerprogramm aufweist, das, wenn es von einem Prozessor ausgeführt wird, den Prozessor veranlasst, das Verfahren zum Bestimmen der sichtbaren Ebene nach einem der Ansprüche 1 bis 4 durchzuführen.

13. Computerlesbares Speichermedium, das ein darauf gespeichertes Computerprogramm aufweist, das, wenn es von einem Prozessor ausgeführt wird, den Prozess veranlasst, das inverse Strahlverfolgungsverfahren nach einem der Ansprüche 5 bis 7 durchzuführen.

## Revendications

1. Procédé de détermination de plan visible, comprenant le fait de :
obtenir (S11) des informations de plans pour des plans à déterminer dans un espace cible ;
détecter (S12), pour un premier plan à déterminer, s'il existe un deuxième plan à déterminer qui fait que chaque segment de droite formé en reliant chaque point convexe de plan dans le premier plan à déterminer avec un point de transmission de signal passe par le deuxième plan à déterminer, dans lequel le premier plan à déterminer et le deuxième plan à déterminer sont deux plans quelconques dans les plans à déterminer ;
déterminer (S13) si le premier plan à déterminer est un plan visible selon le résultat de la détection ; et
mettre en œuvre (S14) l'étape de détection et l'étape de détermination pour un plan successif à déterminer, jusqu'à ce que tous les plans à déterminer soient traversés, de manière à obtenir un ensemble de plans visibles dans l'espace cible ;
dans lequel le plan successif à déterminer est l'un des plans qui n'ont pas été déterminés parmi les plans à déterminer ; et
dans lequel les plans à déterminer comprennent des plans où sont situés des surfaces d'objets dans l'espace cible, et dans lequel trois des plans à déterminer se croisent en un point convexe de plan.

2. Procédé de détermination de plan visible selon la revendication 1, dans lequel, avant l'étape consistant à détecter, pour le premier plan à déterminer, si le deuxième plan à déterminer existe, le procédé comprend en outre le fait de :
obtenir des informations de position du point de transmission.

3. Procédé de détermination de plan visible selon la revendication 1, dans lequel l'étape consistant à détecter, pour le premier plan à déterminer, si le deuxième plan à déterminer existe, lequel fait que chaque segment de droite formé en reliant chaque point convexe de plan dans le premier plan à déterminer avec le point de transmission de signal passe par le deuxième plan à déterminer, comprend le fait de :
lire (S203) dans une équation de plan du premier plan à déterminer et obtenir les coordonnées de chaque point convexe de plan du premier plan à déterminer ;
relier (S204) chaque point convexe de plan avec le point de transmission de signal en vue d'obtenir respectivement des segments de droite correspondant respectivement aux points convexes de plan ; et
détecter si le deuxième plan à déterminer existe, lequel croise chaque segment de droite parmi les plans à déterminer.

4. Procédé de détermination de plan visible selon la revendication 1, dans lequel l'étape consistant à déterminer si le premier plan à déterminer est un plan visible selon le résultat de la détection comprend le fait de :
déterminer le premier plan à déterminer comme étant un plan invisible dans le cas où le résultat de la détection indique que le deuxième plan à déterminer existe ; et
déterminer le premier plan à déterminer comme étant un plan visible dans le cas où le résultat de la détection indique que le deuxième plan à déterminer n'existe pas.

5. Procédé de lancer de rayon inverse, comprenant le fait de :
calculer (S32) une propagation de rayon sur chaque plan visible de l'ensemble obtenu selon le procédé de détermination de plan visible selon la revendication 1, en fonction de la position du point de transmission de signal et de la position d'un point de réception de signal, en vue de déterminer un chemin de propagation de signal correspondant.

6. Procédé de lancer de rayon inverse selon la revendication 5, comprenant en outre le fait de :
obtenir des informations de position du point de transmission et des informations de position du point de réception.

7. Procédé de lancer de rayon inverse selon la revendication 5, dans lequel, après l'étape de calcul de la propagation de rayon sur chaque plan visible de l'ensemble en fonction de la position du point de transmission de signal et de la position d'un point de réception de signal, le procédé comprend en outre le fait de :
déterminer (S407) une perte d'intensité de signal d'un signal transmis, causée par le chemin de propagation de signal ; et
réserver (S409) le chemin de propagation de signal dans le cas où l'intensité de signal du signal soumis à la perte est supérieure ou égale à une valeur de seuil prédéfinie, et supprimer (S410) le chemin de propagation de signal dans le cas où l'intensité de signal du signal soumis à la perte est inférieure à la valeur de seuil prédéfinie.

8. Dispositif de détermination de plan visible, comprenant :
une unité d'obtention (111) configurée de manière à obtenir des informations de plan pour des plans à déterminer dans un espace cible ;
une unité de détection (112) configurée de manière à détecter, pour un premier plan à déterminer, s'il existe un deuxième plan à déterminer qui fait que chaque segment de droite formé en reliant chaque point convexe de plan dans le premier plan à déterminer avec un point de transmission de signal passe par le deuxième plan à déterminer, dans lequel le premier plan à déterminer et le deuxième plan à déterminer sont deux plans quelconques dans les plans à déterminer ;
une unité de détermination (113) configurée de manière à déterminer si le premier plan à déterminer est un plan visible selon le résultat de la détection ;
dans lesquelles l'unité de détection (112) et l'unité de détermination (113) sont en outre configurées de manière à mettre en œuvre l'opération de détection et l'opération de détermination pour un plan successif à déterminer, jusqu'à ce que tous les plans à déterminer soient traversés, de manière à obtenir un ensemble de plans visibles dans l'espace cible ;
dans lequel le plan successif à déterminer est l'un des plans qui n'ont pas été déterminés parmi les plans à déterminer ; et
dans lequel les plans à déterminer comprennent des plans où sont situés des surfaces d'objets dans l'espace cible, et dans lequel trois des plans à déterminer se croisent en un point convexe de plan.

9. Dispositif de détermination de plan visible selon la revendication 8, dans lequel l'unité de détection (112) est en outre configurée de manière à :
lire dans une équation de plan du premier plan à déterminer et obtenir les coordonnées de chaque point convexe de plan du premier plan à déterminer ;
relier chaque point convexe de plan avec le point de transmission de signal en vue d'obtenir respectivement des segments de droite correspondant respectivement aux points convexes de plan ; et
détecter si le deuxième plan à déterminer existe, lequel croise chaque segment de droite parmi les plans à déterminer.

10. Dispositif de détermination de plan visible selon la revendication 8, dans lequel l'unité de détermination (113) est en outre configurée de manière à :
déterminer le premier plan à déterminer comme étant un plan invisible dans le cas où le résultat de la détection indique que le deuxième plan à déterminer existe ; et
déterminer le premier plan à déterminer comme étant un plan visible dans le cas où le résultat de la détection indique que le deuxième plan à déterminer n'existe pas.

11. Dispositif de lancer de rayon inverse, comprenant le dispositif de détermination de plan visible selon la revendication 8, et :
une deuxième unité d'obtention (121) couplée en communication au dispositif de détermination de plan visible et configurée de manière à obtenir l'ensemble de plans visibles dans l'espace cible ; et
une unité de calcul de propagation (122) configurée de manière à calculer la propagation de rayon sur chaque plan visible de l'ensemble en fonction de la position du point de transmission de signal et de la position d'un point de réception de signal en vue de déterminer un chemin de propagation de signal correspondant.

12. Support de stockage lisible par ordinateur sur lequel est stocké un programme informatique qui, lorsqu'il est exécuté par un processeur, amène le processeur à mettre en œuvre le procédé de détermination de plan visible selon l'une quelconque des revendications 1 à 4.

13. Support de stockage lisible par ordinateur sur lequel est stocké un programme informatique qui, lorsqu'il est exécuté par un processeur, amène le procédé à mettre en œuvre le procédé de lancer de rayon inverse selon l'une quelconque des revendications 5 à 7.
